# EUROPÄISCHE PATENTSCHRIFT

(11) **EP 0 959 584 B1**
(45) Veröffentlichungstag und Bekanntmachung des Hinweises auf die Patenterteilung: **13.09.2006**
(21) Anmeldenummer: 99107963.3
(22) Anmeldetag: 22.04.1999
(51) Int. Cl.: H04L 9/08, H04L 9/06

(54) **Verfahren und Verschlüsselungssystem zur gesicherten Übertragung von Nachrichten**
Method and encryption system for secure data transmission
Procédé et système cryptographique de transmission sécurisée de données

(30) Priorität: 20.05.1998 DE 19822685
(43) Veröffentlichungstag der Anmeldung: 24.11.1999
(73) Patentinhaber: Deutsche Telekom AG, 53113 Bonn (DE)
(72) Erfinder: Dultz, Wolfgang Prof. Dr. Dr., 65936 Frankfurt/M. (DE); Hildebrandt, Eric Dipl.-Phys., 60487 Frankfurt/M. (DE); Schmitzer, Heidrun Dr., 93051 Regensburg (DE); Dultz, Gisela, 64936 Frankfurt/M. (DE)

(56) Entgegenhaltungen:
- EP-A- 0 022 069
- DE-A- 19 641 754
- DE-B- 1 216 921
- US-A- 5 272 754
- US-A- 5 771 291

## Beschreibung

Die vorliegende Erfindung betrifft ein Verfahren zur gesicherten Übertragung von Nachrichten zwischen zumindest zwei Benutzern eines Telefonkommunikationsnetzes. Sie betrifft zudem ein Verschlüsselungssystem zur Durchführung dieses Verfahrens mit den zugehörigen technischen Einrichtungen.

Durch das Vordringen von Computern in nahezu alle Lebensbereiche und ihre zunehmende Vernetzung untereinander durch großräumige Telekommunikationsnetze ist der Strom des Datenverkehrs zwischen Rechnern unterschiedlichster Art enorm angestiegen. Viele der ausgetauschten Informationen sind vertraulich und sollen und/oder dürfen von unbefugten Dritten nicht mitgelesen werden können, so daß ein großer Bedarf an einer kryptographischen Absicherung dieses Datenverkehrs besteht. Einfache kryptographische Verfahren halten aber einer Kryptoanalyse mit Hilfe von Rechnern nicht stand, so daß ein großes Interesse an Verschlüsselungsverfahren besteht, die auch bei einem Einsatz von Rechnern unter Verwendung neuartiger Entschlüsselungsverfahren sicher sind.

Ähnliches gilt auch für einen Informationsaustausch beim Telefonieren oder Faxen, da durch einen Einsatz modernster Computertechnik in Verbindung mit automatischen Worterkennungstechniken sowohl im industriellen als auch im privaten Bereich praktisch jedes über öffentliche Übertragungskanäle gegangene Wort problemlos aufgezeichnet, später wieder gesucht und ausgewertet werden kann. Zumindest Privatleute sind zur Zeit einem solchen Eingriff in ihre Intimsphäre praktisch noch schutzlos ausgeliefert, da es an einer hinreichenden Zugänglichkeit zu entsprechenden Verschlüsselungs- bzw. Entschlüsselungsverfahren und an entsprechenden Vorrichtungen zur Durchführung dieser Verfahren fehlt. Zudem können unbefugte Dritte bei einem Großteil der üblicherweise als relativ sicher geltenden bekannten Verschlüsselungsverfahren durch einen sehr großen Rechenaufwand und/oder neuartige Entschlüsselungsverfahren in den Besitz der ausgetauschten Informationen gelangen, was theoretisch auch durch eine staatliche Beschlagnahme des verwendeten Schlüssels möglich wäre.

Als absolut sicher bezüglich eines Entschlüsselungsversuchs durch Computereinsatz gelten zur Zeit lediglich Verschlüsselungsverfahren, bei denen vom Sender und Empfänger einer Nachricht jeweils der gleiche geheime zufällige Schlüssel benutzt wird, der solange wie die Nachricht selbst ist und nur einmal zur Verschlüsselung verwendet wird.

Aus der US 5,272,754 ist Computersystem zur sicheren Übertragung von Daten zwischen Computern über ein gewöhnliches Übertragungsmedium bekannt Ein Kartenleser ist vorgesehen, in den ein Benutzer eine Chipkarte, welche einen Token speichert, einführen kann, um einen Zugriff zum Computersystem zu erhalten.

Aus der EP-A-0 022 069 ist eine Vorrichtung zur chiffrierten Übermittlung von Nachrichten bekannt. Sende- und Empfangsseitig sind jeweils ein Chiffriergenerator und ein Schlüsselbehälter vorgesehen, wobei in dem Schlüsselbehälter die für die Steuerung des Chiffriergenerators notwendige Schlüsselinformation enthalten ist. Der Schlüsselbehälter besteht aus einem transportablen, gegen unbefugtes Öffnen gesichertes Gehäuse, in welchem ein Speicher für die Schlüsselinformation angeordnet ist. Zur Neuladung der im Schlüsselbehälter enthaltenen Schlüsselspeicher wird der Schlüsselbehälter an eine Ladezentrale angeschlossen, welche in einem für Unbefugte unzugänglichen, während des Betriebs völlig abgeschlossenen Raum untergebracht ist.

Die Aufgabe der vorliegenden Erfindung besteht daher in der Schaffung eines Verfahrens zur individuellen Erzeugung solch geheimer zufälliger Schlüssel und zum Austausch der erzeugten Schlüssel zwischen zumindest zwei Benutzern eines Telekommunikationsnetzes, um ausgetauschte Informationen, sei es durch Telefon, Fax oder PC, abhörsicher zu verschlüsseln. Die Aufgabe besteht zudem in der Schaffung eines Verschlüsselungssystems zur Durchführung dieses Verfahrens mit den zugehörigen technischen Einrichtungen. Weiterhin ist es Aufgabe der Erfindung, die Schlüsselerzeugung und -verteilung dergestalt vorzunehmen, daß eine Zuordnung der Schlüsselinformation zu den zugehörigen Benutzern verhindert wird. Diese Aufgabe wird erfindungsgemäß durch das in Anspruch 1 angegebene Verfahren gelöst, wobei bevorzugte Ausführungsformen den Unteransprüchen 2 - 12 zu entnehmen sind.

Ein Verschlüsselungssystem zur Durchführung dieses Verfahrens ist Anspruch 13 zu entnehmen, während in den Ansprüchen 14 bis 19 bevorzugte Ausführungsformen beansprucht werden.

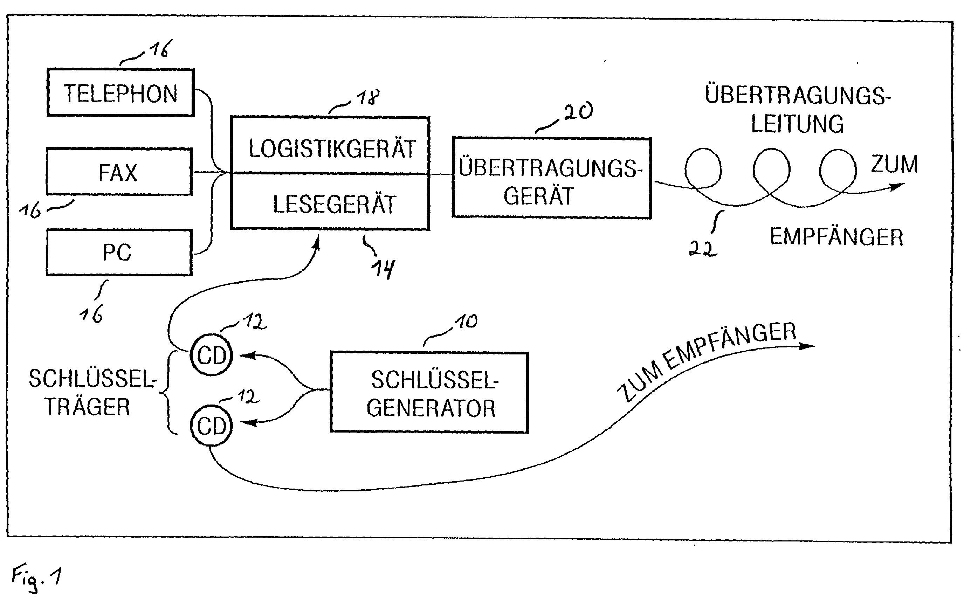

Besondere Merkmale und Vorteile des erfindungsgemäßen Verschlüsselungsverfahrens, des erfindungsgemäßen Verschlüsselungssystems zur Durchführung dieses Verfahrens und der zugehörigen technischen Einrichtungen des Systems ergeben sich aus der nachfolgenden ausführlichen Beschreibung eines Ausführungsbeispiels, das in der zugehörigen Fig. 1 schematisch dargestellt ist.

Fig. 1 zeigt einen Schlüsselgenerator 10 zur Erzeugung eines zufälligen binären Schlüssels großer Länge, der im vorliegenden Ausführungsbeispiel mittels eines (nicht dargestellten) eingebauten optischen Zufallsgenerators mit Strahlteiler erzeugt wird, wie er beispielsweise der deutschen Patentanmeldung 196 41 754.6 zu entnehmen ist. Es kann jedoch auch ein Zufallsgenerator eingesetzt werden, bei dem die spontane Emission eines Photons in elektrisch oder optisch angeregter Materie oder der radioaktive Zerfall zur Schlüsselerzeugung verwendet wird. Denkbar ist auch die Verwendung eines physikalischen Rauschverfahrens oder eines sonstigen geeigneten physikalischen Verfahrens.

Der erzeugte Schlüssel wird nun ohne interne Speicherung durch eine (nicht dargestellte) eingebaute Schreibeinrichtung in dem Schlüsselgenerator 10 in zumindest zwei transportable Daten- oder Schlüsselträger 12 eingeschrieben und in dieser Form an einen Benuzter ausgegeben, wobei die Anzahl und eventuell auch die Art an ausgegebenen Datenträgern mittels einer (nicht dargestellten) Eingabetastatur durch den Benutzer frei wählbar ist. Als Datenträger 12 können hierbei, wie im vorliegenden Fall, CDs verwendet werden. Der Schlüssel kann beispielsweise jedoch auch auf Magnetbändern, auf geeigneten Halbleiterspeichern oder einer sonstigen geeigneten transportablen Speichereinrichtung gespeichert und ausgegeben werden.

Der Schlüsselgenerator 10 ist öffentlich zugänglich, um möglichst breiten Bevölkerungskreisen eine kryptographische Absicherung ihrer Nachrichtenverbindungen zu ermöglichen. Es sollten daher möglichst viele Schlüsselgeneratoren 10 flächendeckend installiert werden, wobei darauf zu achten ist, daß die Stelle, die die aufgestellten Geräte 10 betreut, ein gewisses Vertrauen genießt, so wie dies beispielsweise bei der Post der Fall ist. Hierdurch ist die Gefahr einer Manipulation an den Geräten 10 und die Wahrscheinlichkeit, daß der Schlüssel auch an unbefugte Dritte gelangt und diese den Schlüssel einer bestimmten Person zuordnen können, relativ gering.

Die Anonymität bei der Schlüsselausgabe und damit die Sicherheit des Verschlüsselungsverfahrens wird noch dadurch erhöht, daß die Schlüsselgeneratoren 10 vorzugsweise durch Münzeinwurf oder durch Eingabe eines sonstigen Zahlungsmittels, wie z.B. eine entsprechende Magnetstreifenkarte, einfach aktivierbar sind, ohne daß sich der Benutzer hierfür ausweisen muß oder eventuell Daten der Magnetstreifenkarte gespeichert werden.

Angesichts des enormen Fortschritts der Technik ist es jedoch auch denkbar, daß Schlüsselgeneratoren 10 der genannten Art zukünftig so kostengünstig und kompakt herstellbar sind, daß sie auch für Privatpersonen erschwinglich werden und dann in großer Anzahl auch Eingang in Privathaushalte finden.

Die Anzahl der angegebenen Datenträger 12 ist über eine (nicht dargestellte) Eingabetastatur so wählbar, daß sie der Anzahl der miteinander kommunizierenden Benutzer entspricht. Bei einem Sender und einem Empfänger werden somit zwei Datenträger 12 ausgegeben, auf denen jeweils derselbe zufällige Schlüssel aufgezeichnet ist und von denen der Sender und der Emfpänger jeweils einen Datenträger 12 erhält. Die Übergabe der Datenträger 12 kann hierbei beispielsweise persönlich oder aber durch Zusendung per Post erfolgen. Ein sicherer Schlüsselaustausch kann auch unter Verwendung eines geeigneten Schlüsselverteilungssystems erfolgen, wie es bei Fachleuten auf diesem Gebiet beispielsweise unter der Bezeichnung "Quantenkryptographie" bekannt ist.

Zur Verschlüsselung einer Nachricht werden die Datenträger 12 von den Benutzern nun in Leseeinrichtungen 14 eingegeben, die den von den Benutzern, d.h. dem Sender einer Nachricht und dem zugehörigen Empfänger der Nachricht, zur Nachrichtenübermittlung verwendeten Telekommunikationssendeeinrichtungen 16, wie z.B. Telefone, Faxgeräte oder PCs, jeweils zugeordnet sind und zum Einlesen des jeweils verwendeten Schlüssels von den Datenträgern dienen.

Die ordnungsgemäße Eingabe des Schlüssels und die Übereinstimmung der von den Benutzern eingegebenen Schlüssel wird nun mit Hilfe von Logistikeinrichtungen 18 überprüft, die den zur Nachrichtenübermittlung verwendeten Telekommunikationssendeeinrichtungn 16 ebenfalls zugeordnet sind und beim Aufbau einer Verbindung automatisch Kontakt miteinander aufnehmen.

Die Logistikeinrichtungen 18 synchronisieren beim Verschlüsseln oder Entschlüsseln einer Nachricht auch die Schlüssel bei Sender und Empfänger oder Teile dieser Schlüssel und sorgen dafür, daß zur Verschlüsselung nur die bisher unbenutzten Teile des Zufallsschlüssels auf den Schlüsselträgern 12 verwendet werden. Dies geschieht zum Beispiel dadurch, daß benutzte Teile eines Schlüssels gelöscht, unbrauchbar gemacht werden, oder daß die Stelle auf dem Datenträger, bis zu der hin der Schlüssel verwendet worden ist, gespeichert wird.

Das Verschlüsseln einer zu übermittelnden binären Nachricht erfolgt beispielsweise einfach dadurch, daß der Schlüssel im Binärcode zur Nachricht addiert (modulo 2) und die entstehende Zufallssequenz anschließend von einer zugeordneten Übertragungseinrichtung 20 über eine Übertragungsleitung 22 zu dem jeweiligen Empfänger übertragen wird. Von ankommenden verschlüsselten Nachrichten wird der Zufallsschlüssel wieder subtrahiert und dadurch die Nachricht entschlüsselt. Anschließend kann die Nachricht dem Telefon, Faxgerät usw. des jeweiligen Empfängers zugeführt werden. Ist ein Schlüssel ganz abgearbeitet, so kann an jedem Schlüsselgenerator 10 ein neuer, mit keinem anderen Schlüssel übereinstimmender Schlüssel bezogen werden, der dann auch wiederum nur einmal verwendet wird.

Die Leseeinrichtung 14 und die Logistikeinreichtung 18 lassen sich sehr klein und leicht ausführen, so daß sie jeweils für sich oder aber auch in einer kombinierten Einrichtung sogar in tragbare Handapparate integriert werden können, was den Anwendungsbereich des erfindungsgemäßen Verfahrens enorm erweitert.

Bei Wechselgesprächen über das Telefon muß die Verschlüsselung und Übertragung sowie die Entschlüsselung während des Gesprächs und in den Gesprächspausen erfolgen, so daß unter Umständen Zwischenspeicher erforderlich sind, um Nachrichtenteile vor der Übertragung zu sammeln. Diese einzelnen Bauteile sind aber auch schon für normale Übertragungen und Verschlüsselungen sowie für das Lesen und Aufzeichnen von Nachrichten erforderlich.

Wenn ein Sender von Nachrichten mit mehreren Empfängern abhörsicher korrespondieren möchte, kann er für jede dieser Verbindungen einen eigenen Schlüssel verwenden, der wiederum jeweils auf zwei identischen Datenträgern 12 aufgezeichnet ist, von denen Sender und Empfänger jeweils einen bekommen. Um hier Ordnung zu halten, können die verschiedenen Datenträger 12 mit den Schlüsseln in eine Vorrichtung eingelegt werden, die die einzelnen Schlüssel den ausgewählten Empfängern zuordnet. Sie umfaßt eine Aufnahmeeinrichtung für die verschiedenen Schlüsselträger 12 und wählt beim Aufbau einer Verbindung automatisch den richtigen aus, der den selben Schlüssel enthält, den der ausgewählte Empfänger bekommen hat. Sind die Schlüsselträger CDs, so ähnelt die Vorrichtung einem Plattenwechsler in einer Musikbox. Die Zuordnung der einzelnen Schlüssel kann hierbei entweder manuell durch den Benutzer erfolgen oder aber durch eine Logistikeinrichtung der Vorrichtung selbst, die vor dem Aufbau einer Verbindung mit der Gegenlogistikeinrichtung eines Empfängers in Kontakt tritt, den eingelegten Schlüsselträger bzw. Schlüssel überprüft und automatisch den dazu passenden Schlüsselträger bzw. Schlüssel auswählt. Das Einlesen der Schlüssel von den Schlüsselträgern 12 erfolgt auch hierbei wiederum mittels einer integrierten Leseeinrichtung.

Denkbar ist auch, daß sowohl Empfänger als auch Sender über eine entsprechende Vorrichtung verfügen, in die jeweils mehrere Datenträger 12 mit Schlüsseln eingelegt werden, um dann entweder in einer fest vorgegebenen Reihenfolge nacheinander abgearbeitet zu werden oder aber in einer von der Logistikeinrichtung des Senders bestimmten zufälligen Reihenfolge, die dann mit der Gegenlogistikeinrichtung des Empfängers in Kontakt tritt, um dort das Einlegen eines Datenträgers mit dem gleichen Schlüssel zu initiieren.

Da die zufälligen Schlüssel bei dem erfindungsgemäßen Verfahren nur auf den Schlüsselträgern 12 aufgezeichnet werden und auch den Übertragungs- und Leseeinrichtungen 20 bzw. 14 nicht bekannt werden und zudem auch nur einmal zum Verschlüsseln einer Nachricht verwendet werden, ist das Verfahren von einem unbefugten Dritten selbst mit großem Rechenaufwand und dem Einsatz modernster Entschlüsselungsverfahren praktisch nicht zu brechen solange die Schlüsselträger 14 mit den Schlüsseln nicht in unbefugte Hände gelangen, was durch entsprechende Vorsichtsmaßnahmen relativ einfach zu verhindern ist.

## Patentansprüche

1. Verfahren zur gesicherten Übertragung von Nachrichten zwischen zumindest zwei Benutzern eines Telekommunikationsnetzes mit folgenden Verfahrensschritten:
a) Aktivieren eines öffentlich zugänglichen Schlüsselgenerators (10) durch Eingabe eines anonymen Zahlungsmittels durch einen Benutzer;
b) Erzeugung eines geheimen, zufälligen binären Schlüssels großer Länge durch den Schlüsselgenerator (10);
c) Einschreiben dieses Schlüssels in zumindest zwei transportable Datenträger (12) und Ausgabe dieser transportablen Datenträger (12) durch den Schlüsselgenerator (10) an den Benutzer, wobei die Benutzer je einen transportablen Datenträger (12) mit dem Schlüssel erhalten, und wobei die Speicherung der erzeugten Schlüssel ausschließlich auf den besagten auszugebenden transportablen Datenträgern (12) erfolgt;
d) Eingabe dieser transportablen Datenträger (12) in Leseeinrichtungen (14), die den von den Benutzern zur Nachrichtenübermittlung verwendeten Telekommunikationsendeinrichtungen (16) jeweils zugeordnet sind, und Einlesen des in die transportablen Datenträger (12) eingeschriebenen Schlüssels durch die Leseeinrichtungen (14);
e) Aufbauen einer Verbindung zwischen den von den Benutzern zur Nachrichtenübermittlung verwendeten Telekommunikations-Endeinrichtungen (16);
f) Überprüfen der Eingabe der transportablen Datenträger und Vergleichen der eingelesenen Schlüssel durch Logistikeinrichtungen (18), die den von den Benutzern zur Nachrichtenübermittlung verwendeten Telekommunikationsendeinrichtungen (16) jeweils zugeordnet sind; und
g) Verschlüsseln der zu übermittelnden Nachrichten mit wenigstens einem Teil des Schlüssels bei Übereinstimmung der Schlüssel.

2. Verfahren nach Anspruch 1,
**dadurch gekennzeichnet, daß** nach dem Verfahrensschritt e) folgender Schritt ausgeführt wird:
- Synchronisieren der eingelesenen Schlüssel oder Teile dieser Schlüssel durch die Logistikeinrichtungen (18) zur Ver- und Entschlüsselung der zu übermittelnden bzw. empfangenen Nachrichten.

3. Verfahren nach Anspruch 1 oder 2,
**dadurch gekennzeichnet,**
**daß** von einem Benutzer i, der mit mehreren anderen Benutzern kommunizieren möchte, mehrere transportable Datenträger (12) mit unterschiedlichen Schlüsseln ij, die jeweils einer Verbindung zwischen dem Benutzer i und einem anderen Benutzer j zugeordnet sind, in die der Telekommunikationsendeinrichtung (16) des Benutzers i zugeordnete Leseeinrichtung (14) oder eine dieser zugeordneten Einrichtung eingegeben werden, die beim Aufbau einer Verbindung zwischen den Benutzern i und j automatisch den jeweils zugeordneten Schlüssel ij auswählt und zur Verschlüsselung verwendet.

4. Verfahren nach einem der Ansprüche 1 bis 3,
**dadurch gekennzeichnet,**
**daß** ein optischer Zufallsgenerator mit Strahlteiler zur Schlüsselerzeugung verwendet wird.

5. Verfahren nach einem der Ansprüche 1 bis 3,
**dadurch gekennzeichnet,**
**daß** die spontane Emission eines Photons in elektrisch oder optisch angeregter Materie zur Schlüsselerzeugung verwendet wird.

6. Verfahren nach einem der Ansprüche 1 bis 3,
**dadurch gekennzeichnet,**
**daß** ein physikalisches Rauschverfahren oder der radioaktive Zerfall zur Schlüsselerzeugung verwendet wird.

7. Verfahren nach einem der Ansprüche 1 bis 6,
**dadurch gekennzeichnet,**
**daß** als transportabler Datenträger (12) ein Magnetband, eine CD oder ein geeigneter Halbleiterspeicher verwendet wird.

8. Verfahren nach einem der Ansprüche 1 bis 7,
**dadurch gekennzeichnet,**
**daß** die Anzahl und/oder die Art der transportablen Datenträger (12) frei wählbar ist.

9. Verfahren nach einem der Ansprüche 1 bis 8,
**dadurch gekennzeichnet,**
**daß** der Schlüssel oder Teile des Schlüssels nur einmal verwendet werden.

10. Verschlüsselungssystem zur Durchführung des Verfahrens nach einem der Ansprüche 1 bis 9,
umfassend
- wenigstens einen Schlüsselgenerator (10) mit einer Einrichtung zum Erzeugen eines zufälligen binären Schlüssels großer Länge, einer Einrichtung zum Einschreiben des erzeugten Schlüssels in zumindest zwei transportable Datenträger (12);
- zumindest zwei Leseeinrichtungen (14) zum Einlesen des Schlüssels von den beschriebenen transportablen Datenträgern (12), die den von den Benutzern zur Nachrichtenübermittlung verwendeten Telekommunikationsendeinrichtungen (16) jeweils zugeordnet sind;
- zumindest zwei Logistikeinrichtungen (18) zur Überprüfung der Eingabe der transportablen Datenträger und zum Vergleichen der eingelesenen Schlüssel, wobei die Logistikeinrichtungen (18) den von den Benutzern zur Nachrichtenübermittlung verwendeten Telekommunikationsendeinrichtungen (16) jeweils zugeordnet sind; und
- zumindest zwei Verschlüsselungs- und Entschlüsselungseinrichtungen zur Ver- und Entschlüsselung von zu übermittelnden bzw. empfangenen Nachrichten mit wenigstens einem Teil der eingelesenen Schlüssel bei übereinstimmenden Schlüsseln, wobei die Ver- und Entschlüsselungseinrichtungen den von den Benutzern zur Nachrichtenübermittlung verwendeten Telekommunikationsendeinrichtungen (16) jeweils zugeordnet sind,
**dadurch gekennzeichnet, daß**
der Schlüsselgenerator (10) öffentlich zugänglich ist, wobei eine Einrichtung zum Ausgeben der zumindest zwei transportablen Datenträger (12) an einen Benutzer und eine Einrichtung zum Aktivieren des Schlüsselgenerators durch Eingabe eines anonymen Zahlungsmittels durch einen Benutzer vorgesehen sind, wobei der Schlüsselgenerator (10) dergestalt ausgeführt ist, daß die Speicherung der erzeugten Schlüssel ausschließlich auf den besagten auszugebenden transportablen Datenträgern (12) erfolgt, und wobei die transportablen Datenträger (12) in die Leseeinrichtungen (14) eingegeben werden können.

11. Verschlüsselungssystem nach Anspruch 10,
**dadurch gekennzeichnet, daß**
die Logistikeinrichtungen zur Synchronisation der eingegebenen Schlüssel oder Teile dieser Schlüssel untereinander ausgebildet sind.

12. Verschlüsselungssystem nach Anspruch 10 oder 11,
**dadurch gekennzeichnet, daß**
die Einrichtung zum Erzeugen eines zufälligen binären Schlüssels großer Länge einen optischen Zufallsgenerator mit einem Strahlteiler umfaßt.

13. Verschlüsselungssystem nach Anspruch 10 oder 11,
**dadurch gekennzeichnet, daß**
die Einrichtung zum Erzeugen eines zufälligen binären Schlüssels großer Länge einen Zufallsgenerator umfaßt, der auf der spontanen Emission von Photonen in elektrisch oder optisch angeregter Materie basiert.

14. Verschlüsselungssystem nach Anspruch 10 oder 11,
**dadurch gekennzeichnet, daß**
die Einrichtung zum Erzeugen eines zufälligen binären Schlüssels großer Länge einen Zufallsgenerator umfaßt, der auf einem physikalischen Rauschverfahren oder dem radioaktiven Zerfall basiert.

15. Verschlüsselungssystem nach einem der Ansprüche 10 bis 14,
**dadurch gekennzeichnet, daß**
der Schlüsselgenerator eine Eingabetastatur zum Eingeben der gewünschten Anzahl an transportablen Datenträgern (12) und/oder der Art dieser transportablen Datenträger (12) aufweist.

16. Verschlüsselungssystem nach einem der Ansprüche 10 bis 15, **dadurch gekennzeichnet, daß**
wenigstens eine Leseeinrichtung (14) zum Einlesen mehrerer verschiedener Schlüssel, die verschiedenen Empfängern zugeordnet sind, ausgebildet ist, und daß die dazu gehörende Logistikeinrichtung (18) zum Zuordnen der verschiedenen eingelesenen Schlüssel zu unterschiedlichen Verbindungen zwischen jeweils zwei Benutzern ausgebildet ist.

## Claims

1. Method for secured transmission of messages between at least two users of a telecommunications network, with the following steps:
a) Activation of a publicly accessible key generator (10) through introduction of an anonymous payment means by a user;
b) Generation of a secret random binary key of great length by the key generator (10);
c) Writing of this key into at least two transportable data media (12) and issuance of these transportable data media (12) by the key generator (10) to the user, wherein the users each retain one transportable data media (12) with the key, and wherein the storage of the generated keys takes place exclusively on the aforementioned transportable data media (12) to be issued;
d) Introduction of these transportable data media (12) into reader devices (14), each of which devices is associated with the telecommunications terminals (16) used by the users to transmit messages, and reading-in by the reader devices (14) of the key written in the transportable data media (12);
e) Establishment of a connection between the telecommunications terminals (16) used by the users to transmit messages;
f) Verification of the introduction of the transportable data media and comparison of the read-in key by logistical devices (18) which are associated with each of the telecommunications terminals (16) used by the users to transmit messages; and
g) Encryption, with at least part of the key, of the messages to be transmitted, in the event that the keys match.

2. Method according to claim 1, **characterized in that** the following step is performed following step e):
- Synchronization of the read-in keys or parts of these keys by the logistical devices (18) for encryption and decryption of the messages to be sent or received.

3. Method according to claim 1 or 2, **characterized in that** a user i, who wishes to communicate with multiple other users, introduces multiple transportable data media (12) with different keys ij, each of which is associated with a connection between the user i and another user j, into the reader device (14) associated with the telecommunications terminal (16) of the user i or into a device associated with said reader device, said device automatically selecting the respective associated key ij and using it for encryption when establishing a connection between the users i and j.

4. Method according to any one of claims 1 through 3, **characterized in that** an optical random-number generator with a beam splitter is used for key generation.

5. Method according to any one of claims 1 through 3, **characterized in that** the spontaneous emission of a photon in electrically or optically excited material is used for key generation.

6. Method according to any one of claims 1 through 3, **characterized in that** a physical noise method or radioactive decay is used for key generation.

7. Method according to any one of claims 1 through 6, **characterized in that** a magnetic tape, a CD or a suitable semiconductor memory is used as transportable data media (12).

8. Method according to any one of claims 1 through 7, **characterized in that** the number and/or type of transportable data media (12) is freely selectable.

9. Method according to any one of claims 1 through 8, **characterized in that** the key or parts of the key are used only once.

10. Encryption system for carrying out the method according to any one of claims 1 through 9, comprising
- at least one key generator (10) with a device for generating a random binary key of great length, a device for writing the generated key into at least two transportable data media (12);
- at least two reader devices (14) for reading-in the key from the aforementioned transportable data media (12), said devices being associated with the respective telecommunications terminals (16) used by the users for transmitting messages;
- at least two logistical devices (18) for verifying the introduction of the transportable data media (12) and comparing the read-in keys, said logistical devices (18) being associated with the respective telecommunications terminals (16) used by the users to transmit messages; and
- at least two encryption and decryption devices for encrypting and decrypting messages to be sent or received, using at least a part of the read-in key in the event that the keys match, wherein the encryption and decryption devices are associated with the respective telecommunications terminals (16) used by the users to transmit messages,
**characterized in that** the key generator (10) is publicly accessible, wherein there are provided a device for issuing the at least two transportable data media (12) to a user and a device for activating the key generator through the introduction of an anonymous payment means by the user, wherein the key generator (10) is designed such that the storage of the generated keys takes place exclusively on the aforesaid transportable data media (12) to be issued, and wherein the transportable data media (12) can be introduced into the reader devices (14).

11. Encryption system according to claim 10, **characterized in that** the logistical devices are designed for synchronizing the introduced keys or parts of these keys with one another.

12. Encryption system according to claim 10 or 11, **characterized in that** the device for generating a random binary key of great length includes an optical random-number generator with a beam splitter.

13. Encryption system according to claim 10 or 11, **characterized in that** the device for generating a random binary key of great length includes a random number generator based on the spontaneous emission of photons in electrically or optically excited material.

14. Encryption system according to claim 10 or 11, **characterized in that** the device for generating a random binary key of great length includes a random number generator based on a physical noise method or radioactive decay.

15. Encryption system according to any one of claims 10 through 14, **characterized in that** the key generator has an entry keyboard for entering the desired number of transportable data media (12) and/or the type of these transportable data media (12).

16. Encryption system according to any one of claims 10 through 15, **characterized in that** at least one reader device (14) is designed for reading-in multiple different keys associated with different receivers, and **in that** the logistical device (18) associated therewith is designed to associate the different read-in keys with different respective connections between two users.

## Revendications

1. Procédé de transmission sécurisée de messages entre au moins deux utilisateurs d'un réseau de télécommunications comprenant les étapes suivantes :
a) activation d'un générateur de clés (10) accessible publiquement par l'introduction d'un moyen de paiement anonyme par un utilisateur ;
b) génération d'une clé binaire aléatoire secrète de grande longueur par le générateur de clés (10) ;
c) inscription de ladite clé dans au moins deux supports de données (12) transportables et délivrance desdits supports de données (12) transportables à l'utilisateur par le générateur de clés (10), les utilisateurs recevant chacun un support de données (12) transportable comportant la clé et l'enregistrement des clés générées s'effectuant exclusivement sur lesdits supports de données (12) transportables à délivrer ;
d) introduction desdits supports de données (12) transportables dans des dispositifs de lecture (14) respectivement associés aux terminaux de télécommunications utilisés par les utilisateurs pour la transmission de messages et lecture de la clé inscrite dans les supports de données (12) transportables par les dispositifs de lecture (14) ;
e) établissement d'une liaison entre les terminaux de télécommunications (16) utilisés par les utilisateurs pour la transmission de messages ;
f) vérification de l'introduction des supports de données transportables et comparaison des clés lues moyennant des dispositifs logistiques (18) respectivement associés aux terminaux de télécommunications (16) utilisés par les utilisateurs pour la transmission de messages ; et
g) chiffrement des messages à transmettre avec au moins une partie de la clé en cas de concordance des clés.

2. Procédé selon la revendication 1, **caractérisé en ce que** l'étape e) du procédé est suivie de l'étape suivante :
- synchronisation des clés lues ou de parties de ces clés par les dispositifs logistiques (18) pour le chiffrement et le déchiffrement des messages à transmettre ou à recevoir.

3. Procédé selon la revendication 1 ou 2, **caractérisé en ce qu'**un utilisateur *i*, désirant communiquer avec plusieurs autres utilisateurs, introduit plusieurs supports de données (12) transportables comportant des clés *ij* différentes, respectivement attribuées à une liaison entre l'utilisateur *i* et un autre utilisateur *j*, dans le dispositif de lecture (14) associé au terminal de télécommunication (16) de l'utilisateur *i* ou dans un dispositif associé audit dispositif de lecture qui, lors de l'établissement d'une liaison entre les utilisateurs *i* et *j*, sélectionne automatiquement la clé respectivement attribuée et l'utilise pour le chiffrement.

4. Procédé selon l'une des revendications 1 à 3, **caractérisé en ce qu'**on utilise un générateur aléatoire optique comportant un séparateur de faisceau pour la génération des clés.

5. Procédé selon l'une des revendications 1 à 3, **caractérisé en ce qu'**on utilise l'émission spontanée d'un photon dans de la matière excitée électriquement ou optiquement pour la génération des clés.

6. Procédé selon l'une des revendications 1 à 3, **caractérisé en ce qu'**on utilise un procédé de brouillage physique ou la décomposition radioactive pour la génération des clés.

7. Procédé selon l'une des revendications 1 à 6, **caractérisé en ce qu'**on utilise une bande magnétique, un disque compact ou une mémoire à semi-conducteur appropriée comme support de données (12) transportable.

8. Procédé selon l'une des revendications 1 à 7, **caractérisé en ce que** le nombre et/ou la nature des supports de données (12) transportables peuvent être librement choisis.

9. Procédé selon l'une des revendications 1 à 8, **caractérisé en ce que** la clé ou des parties de la clé ne sont utilisées qu'une seule fois.

10. Système de chiffrement pour la réalisation du procédé selon l'une des revendications 1 à 9, comprenant
- au moins un générateur de clés (10) comportant un dispositif de génération d'une clé binaire aléatoire de grande longueur, un dispositif pour inscrire la clé générée dans au moins deux supports de données (12) transportables ;
- au moins deux dispositifs de lecture (14) pour lire la clé des supports de données (12) transportables décrits, respectivement associés aux terminaux de télécommunication (16) utilisés par les utilisateurs pour la transmission de messages ;
- au moins deux dispositifs logistiques (18) pour vérifier l'introduction des supports de données transportables et pour comparer les clés lues, les dispositifs logistiques (18) étant respectivement associés aux terminaux de télécommunication (16) utilisés par les utilisateurs pour la transmission de messages ; et
- au moins deux dispositifs de chiffrement et de déchiffrement pour le chiffrement et le déchiffrement de messages à transmettre ou à recevoir avec au moins une partie de la clé lue en cas de concordance des clés, les dispositifs de chiffrement et de déchiffrement étant respectivement associés aux terminaux de télécommunication (16) utilisés par les utilisateurs pour la transmission de messages,
**caractérisé en ce que**
le générateur de clés (10) est accessible publiquement, un dispositif pour délivrer les au moins deux supports de données (12) transportables à un utilisateur et un dispositif pour activer le générateur de clés par l'introduction d'un moyen de paiement anonyme par un utilisateur étant prévus, le générateur de clé (10) étant conçu de manière à ce que l'enregistrement des clés générées s'effectue exclusivement sur lesdits supports de données (12) transportables à délivrer et les supports de données (12) transportables pouvant être introduits dans les dispositifs de lecture (14).

11. Système de chiffrement selon la revendication 10, **caractérisé en ce que** les dispositifs logistiques sont conçus pour la synchronisation des clés introduites ou de parties de ces clés entre elles.

12. Système de chiffrement selon la revendication 10 ou 11, **caractérisé en ce que** le dispositif de génération d'une clé binaire aléatoire de grande longueur comprend un générateur aléatoire optique comportant un séparateur de faisceau.

13. Système de chiffrement selon la revendication 10 ou 11, **caractérisé en ce que** le dispositif de génération d'une clé binaire aléatoire de grande longueur comprend un générateur aléatoire basé sur l'émission spontanée de photons dans de la matière excitée électriquement ou optiquement.

14. Système de chiffrement selon la revendication 10 ou 11, **caractérisé en ce que** le dispositif de génération d'une clé binaire aléatoire de grande longueur comprend un générateur aléatoire basé sur un procédé de brouillage physique ou la décomposition radioactive.

15. Système de chiffrement selon l'une des revendications 10 à 14, **caractérisé en ce que** le générateur de clés présente un clavier de saisie pour saisir le nombre souhaité de supports de données (12) transportables et/ou la nature desdits supports de données (12) transportables.

16. Système de chiffrement selon l'une des revendications 10 à 15, **caractérisé en ce qu'**au moins un dispositif de lecture (14) est conçu pour lire plusieurs clés différentes attribuées à des destinataires différents et le dispositif logistique (18) correspondant est conçu pour attribuer les clés différentes lues à différentes communications entre deux utilisateurs respectivement.
